(19) Europäisches Patentamt
European Patent Office
Office européen des brevets

(11) **EP 2 133 253 B1**

(12) **EUROPÄISCHE PATENTSCHRIFT**

(45) Veröffentlichungstag und Bekanntmachung des Hinweises auf die Patenterteilung:
**08.06.2011   Patentblatt 2011/23**

(51) Int Cl.:
*B60W 30/12* *(2006.01)*       *B60W 50/04* *(2006.01)*

(21) Anmeldenummer: **08105787.9**

(22) Anmeldetag: **13.11.2008**

(54) **Verfahren und Vorrichtung für die Steuerung eines Fahrerassistenzsystems**

Method and device for controlling a driver assist system

Procédé et dispositif destinés à la commande d'un système d'assistance au conducteur

(84) Benannte Vertragsstaaten:
**DE FR GB SE**

(30) Priorität: **12.06.2008   DE 102008002401**

(43) Veröffentlichungstag der Anmeldung:
**16.12.2009   Patentblatt 2009/51**

(73) Patentinhaber: **ROBERT BOSCH GMBH**
**70442 Stuttgart (DE)**

(72) Erfinder:
• **Buerkle, Lutz**
  **71229 Leonberg (DE)**
• **Rentschler, Tobias**
  **75180 Pforzheim (DE)**
• **App, Thomas**
  **75059 Zaisenhausen (DE)**

(56) Entgegenhaltungen:
WO-A-2008/006507       DE-A1-102005 003 192
US-A1- 2007 164 852    US-A1- 2007 203 617
US-A1- 2008 091 318

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Stand der Technik

Die Erfindung betrifft ein Verfahren für die Steuerung eines Fahrerassistenzsystems nach dem Oberbegriff des Anspruchs 1. Eine Assistenzfunktion zur Spurverlassenswarnung (LDW = Lane Departure Warning), bei der der Fahrer eines Kraftfahrzeugs akustisch oder haptisch vor dem Verlassen der Fahrspur gewarnt wird, ist inzwischen, insbesondere im Nutzfahrzeugbereich, kommerziell verfügbar und aus der DE 103 11 518 A1 bekannt. Neben dieser Assistenzfunktion ist aus dem obigen Dokument auch eine Lenkassistenzfunktion (LKS = Lane Keeping Support) bekannt, die den Fahrer durch gerichtete Führungsmomente beim Halten des Fahrzeugs in der Fahrspur aktiv unterstützt:

Diese Lenkassistenzfunktion wird im Folgenden als LKS-Funktion bezeichnet. Bei einem Fahrerassistenzsystem mit LKS-Funktion der eingangs genannten Art können Fehler und/oder Fehlmessungen der für die Spurerkennung vorgesehenen bordeigenen Sensoren auftreten. Diese Fehler können sich beispielsweise als Sprung in der lateralen Ablage des Fahrzeugs äußern, der einer in der Realität nicht vorkommenden Fahrzeuggeschwindigkeit entspricht.

Aus DE 101 37292 A1 ist ein Verfahren zum Betreiben eines Fahrerassistenzsystems eines Fahrzeugs, insbesondere eines Kraftfahrzeugs, mit einer servounterstützten Lenkung, mit folgenden Verfahrensschritten bekannt:

- Erfassen oder Abschätzen von Umgebungsdaten einer, vorzugsweise momentanen, Verkehrssituation,
- Erfassen oder Abschätzen von, vorzugsweise momentanen, Bewegungsdaten des Fahrzeugs,
- Vergleichen der erfassten oder abgeschätzten Umgebungsdaten mit den Bewegungsdaten des Fahrzeugs,
- Vergleichen der erfassten oder abgeschätzten Umgebungsdaten mit den Bewegungsdaten des Fahrzeugs,
- Änderung der Unterstützung einer Lenkhandhabe nach Maßgabe des Vergleichs.

Aus DE 197 20 626 A1 ist eine Fahrzustand-Überwachungsvorrichtung für ein Kraftfahrzeug bekannt, die zur Überwachung des Fahrzustands eines Fahrers des Fahrzeugs dient. Das Verhalten des Fahrzeugs und/oder ein Fahrvorgang des Fahrers und/oder mindestens ein Zustand des Fahrers werden detektiert, um hierdurch Fahrzustand-Anzeigedaten zu erzeugen, die den Fahrzustand des Fahrers anzeigen. Es wird auf der Basis der erzeugten Fahrzustand-Anzeigedaten festgestellt, ob der Fahrzustand des Fahrers unnormal ist. Wenn nicht festgestellt wird, dass der Fahrzustand des Fahrers unnormal ist, wird ein Maß an Normalität des Fahrzustandes des Fahrers durch Eingeben einer Mehrzahl von Einzeldaten der Fahrzustand-Anzeigedaten in ein neuronales Netz festgestellt. Es erfolgt eine Warnung und/oder Steuerung des Fahrzeugs abhängig von einem Ergebnis der Feststellung, ob der Fahrzustand des Fahrers unnormal ist, und dem Maß an Normalität des Fahrzustands des Fahrers.

Die US 2008 / 0091318 A1 zeigt ein System zur Linienzentrierungskontrolle für ein Fahrzeug, das ein Fahrergesteuertes Lenkgerät hat.

Die WO 2008 / 006507 zeigt ein Verfahren, eine Vorrichtung und ein Computerprogrammprodukt, mittels derer Sensorwerte von redundanten Sensoren im Fahrzeugbereich, deren Messwerte nicht miteinander synchronisiert sind, miteinander verglichen werden können, um eine Plausibilitätskontrolle durchzuführen.

Die US 2007 / 0164852 zeigt ein Spurverlassensdetektions- / -vermeidungs- und Datenzusammenführungssystem, das zur Verwendung bei einem Fahrzeug und durch einen Bediener geeignet ist, umfasst mindestens einen Spurmarkierungssensor, mindestens einen Zustandssensor und einen Controller, der kommunikativ mit den Sensoren gekoppelt ist und ausgestaltet ist, um eine Zustandsabweichung zu ermitteln und die Zustandsabweichung mit einem vorbestimmten Zustandsschwellenwert zu vergleichen, um eine Systemidentifikation eines Einstellens durch einen Bediener, eine Spurverlassensdetektion bei Kurven und eine Detektion einer Leistungsverschlechterung zu verbessern.

Die US 2007 / 0203617 zeigt ein Fahrerassistenzsystem mit zumindest Fahrerassistenzfunktionen wie LDW (Lane Departure Waming) und LKS (Lane Keeping Support). Die Aktivierung bzw. Deaktivierung der Fahrerassistenzfunktionen (LDW, LKS) ist von einem Vertrauensmaß V abhängig.

Die DE 10 2005 003192 zeigt ein Verfahren zur Kursprädiktion in Fahrerassistenzsystemen für Kraftfahrzeuge, bei dem anhand von fahrdynamischen Daten des Fahrzeugs eine dynamische Kurshypothese erstellt wird, gekennzeichnet durch die folgenden Schritte: Erstellen einer Infrastruktur-Kurshypothese anhand von Daten, die die Verkehrsinfrastruktur beschreiben, aus mindestens einer Informationsquelle; Berechnen eines Gewichtsfaktors, der die Verlässlichkeit der Infrastruktur-Kurshypothese beschreibt, anhand von Merkmalen der Informationsquelle und Fusionieren der Infrastruktur-Kurshypothese mit der dynamischen Kurshypothese mit Gewichtung, entsprechend dem berechneten Gewichtsfaktor, zur Bildung einer endgültigen Kurshypothese.

Offenbarung der Erfindung

Die Erfindung geht von der Erkenntnis aus, dass durch die Plausibilisierung eine Überprüfung ermöglicht wird, ob sich die von den bordeigenen Sensoren erfassten Spurinformationen innerhalb physikalisch plausibler Grenzen bewegen. Denn nur in diesem Fall wird ein betriebssicheres Eingriffsverhalten der LKS-Funktion erreicht. Bei fehlerhaften oder physikalisch nicht plausiblen Spurinformationen kann die LKS-Funktion des Fahrerassistenzsystems dagegen deaktiviert werden, um nicht plausible Lenkeingriffe zu verhindern.

Vorteilhafte Wirkungen

Mit Hilfe der Erfindung gelingt es, ein verbessertes Fahrerassistenzsystem zu schaffen, das sich durch eine größere Zuverlässigkeit bei der Bestimmung einer 20 Referenztrajektorie für die Spurführung des Fahrzeugs mit der LKS-Funktion des Fahrerassistenzsystems und damit eine höhere Betriebssicherheit und höhere Akzeptanz durch den Fahrer- auszeichnet.

Diese vorteilhaften Wirkungen werden bei einem Verfahren für die Steuerung eines Fahrerassistenzsystems mit LKS-Funktion eines Fahrzeugs, bei dem der Verlauf der Fahrspur mit bordeigenen Sensoren erfasst und aus den Sensorsignalen eine Referenztrajektorie für das Fahrzeug abgeleitet wird, auf der die LKS-Funktion das Fahrzeug führt, dadurch erreicht, dass Spurparameter der Referenztrajektorie und zeitliche Änderungen dieser Spurparameter erfasst werden, dass Betragswerte der zeitlichen Änderung der Spurparameter: mit vorgegebenen Grenzwerten verglichen werden und dass bei unterhalb der Grenzwerte liegenden Betragswerten der zeitlichen Änderungen der Spurparameter die Referenztrajektorie als physikalisch plausibel angenommen wird und die LKS-Funktion aktiviert bleibt.

Als Spurparameter werden dabei vorteilhaft die laterale Ablage des Fahrzeugs von der Referenztrajektorie, die Orientierung des Fahrzeugs in Bezug auf die Referenztrajektorie und die Krümmung der Referenztrajektorie berücksichtigt.

Vorteilhaft wird dann aus der Abweichung der Betragswerte der zeitlichen Änderungen der Spurparameter von den vorgegebenen Grenzwerten ein die physikalische Plausibilität der Referenztrajektorie kennzeichnendes Plausibilitätsmaß abgeleitet.

Vorteilhaft wird das Plausibilitätsmaß dann auf einen Wertebereich P mit den Grenzen Null und eins normiert.

Für die Fahrpraxis besonders vorteilhaft ist es, von dem Wert Null als Initialwert des Plausibilitätsmaßes auszugehen und das Plausibilitätsmaß dann bis zu dem Erreichen des Maximalwerts um ein Inkrement zu erhöhen, solange die Betragswerte der zeitlichen Änderungen der Spurparameter unterhalb der Grenzwerte liegen.

Weitere Vorteile ergeben sich aus der Beschreibung und den Unteransprüchen und der Zeichnung.

Kurze Beschreibung der Zeichnungen

Ausführungsformen der Erfindung werden nachfolgend unter Bezug auf die Zeichnung näher erläutert. Dabei zeigt

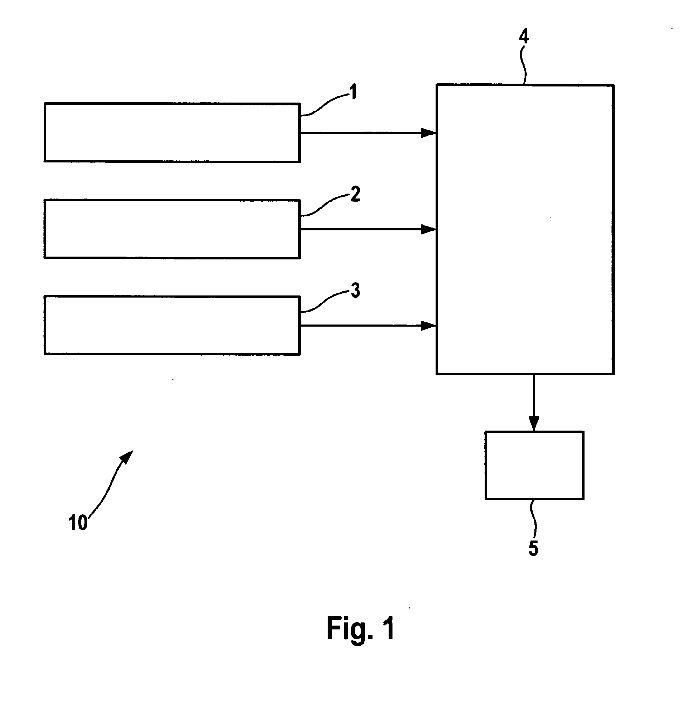

Figur 1	ein Blockschaltbild eines Fahrerassistenzsystems mit LKS-Funktion.

Ausführungsformen der Erfindung

Zur Plausibilisierung der von den bordeigenen Sensoren bereitgestellten Spurinformation stützt sich die Erfindung auf zwei Modelle, die die zeitliche Änderung der Bewegung des Fahrzeugs relativ zu einer Referenztrajektorie beschreiben. Durch die Vorgabe von Grenzwerten kann eine Fehlmessung, die typischerweise zu physikalisch nicht plausiblen Änderungen führt, erkannt werden. Als Beispiel wird hier ein Sprung in der lateralen Ablage genannt, der einer Geschwindigkeit des Fahrzeugs entspricht, die in der Realität nicht vorkommt. Infolge von Fehlern bzw. Fehlmessungen der Sensoren können derartige Sprünge aber entstehen. Werden die vorgegebenen Grenzwerte bei aktivierter LKS-Funktion überschritten, dann können durch das Fahrerassistenzsystem Maßnahmen ergriffen werden, um fehlerhafte Eingriffe durch die LKS-Funktion zu verhindern. Im einfachsten Fall wird die LKS-Funktion bei Auftreten eines Fehlers einfach deaktiviert. Die durch die erfindungsgemäße Plausibilitätsprüfung überwachte ordnungsgemäße Arbeitsweise der LKS-Funktion des Fahrerassistenzsystems führt zu einem sicheren Systemverhalten und zu einer verbesserten Fahrerakzeptanz dieser Fahrerassistenzfunktion.

Die Referenztrajektorie Y (x) eines Fahrzeugs mit LKS-Funktion kann näherungsweise als kubisches Polynom wie folgt dargestellt werden:

$$(1) \qquad Y(x) = Y_0 + \Psi_d x + \frac{\kappa}{3} x^2 + \frac{\kappa'}{6} x^3$$

mit

$Y_0 =$  laterale Ablage des Fahrzeugs in der Fahrspur,
$\Psi_d =$  Orientierung des Fahrzeugs bezüglich der Fahrspur,
$\kappa =$  Krümmung der Fahrspur,
$\kappa' =$  Änderung der Krümmung.

Die Koeffizienten $Y_0$ und $\Psi_d$ beschreiben dabei die Lage des Fahrzeugs relativ zu der Fahrspur bzw. der in der Fahrspur liegenden Referenztrajektorie. Es wird nun unterstellt, dass sich in der Praxis die zeitliche Änderung der beiden genannten Größen innerhalb vorgebbarer Grenzen bewegt, die während des normalen Fahrbetriebs üblicherweise nicht überschritten werden.

Für die zeitliche Änderung der lateralen Ablage $\dot{Y}$ gilt näherungsweise:

$$(2) \qquad \dot{Y} \approx \Psi_d v \quad,$$

mit

$V =$  Geschwindigkeit des Fahrzeugs.

Für die zeitliche Änderung der Fahrzeugorientierung $\dot{\Psi}_d$ gilt:

$$(3) \qquad \dot{\Psi}_d \approx v \cdot \kappa - \dot{\Psi} \,,$$

mit

$\dot{\Psi} =$  Gierrate des Fahrzeugs.

In einer alternativen Ausführungsvariante könnte die zeitliche Änderung der lateralen Ablage $\dot{Y}$ auch durch numerische Differentiation direkt aus den Messgrößen $Y_\kappa$ bestimmt werden.

$$(4) \qquad \dot{Y}_{k-1} \approx \frac{Y_k - Y_{k-2}}{2\Delta t} \,,$$

mit

$Y_\kappa$ - laterale Ablage im k-ten Zeitschritt.

Die Größen $\Psi_d$, $\kappa$ und $Y$ bezeichnet man als Spurparameter. Erfindungsgemäß werden nun die Beziehungen (2), (3) und (4) für die Plausibilitätsprüfung der Spurparameter benutzt. Die Plausibilitätsprüfung wird folgendermaßen durchgeführt. In jedem Zeitschritt oder Taktintervall der Plausibilitätsprüfung werden die zeitliche Änderung $\dot{Y}$ der lateralen Ablage des Fahrzeugs und die zeitliche Änderung $\dot{\Psi}$ der Fahrzeugorientierung aus den von dem Fahrerassistenzsystem bereitgestellten Spurparametern $\Psi_d$, $\kappa$ und $Y$ der Referenztrajektorie berechnet. Die Beträge der berechneten Werte werden dann, gemäß der folgenden Beziehungen. (5), (6), und (7), mit vorgebbaren Grenzwerten verglichen, die in einer Speichereinrichtung des Fahrerassistenzsystems abgelegt sind:

$$(5) \qquad |\dot{Y}| < \dot{Y}_{max}$$

$$(6) \qquad |\dot{\Psi}_d| < \dot{\Psi}_{d,max}$$

$$(7) \qquad |\dot{Y}_{k-1}| < \dot{Y}_{max} \, .$$

Sind diese Beziehungen erfüllt, dann sind die von dem Fahrerassistenzsystem bereitgestellten Spurparameter physikalisch plausibel.

Vorteilhaft findet auch für die von dem Fahrerassistenzsystem bereitgestellte Krümmungsänderung eine Plausibilitätsprüfung gemäß folgender Beziehung statt:

$$(8) \qquad |\kappa'| < \kappa'_{max}$$

Dabei repräsentiert der Grenzwert $\kappa'_{max}$ einen Wertebereich der Krümmungsänderung, der während des normalen Fahrbetriebs nicht verlassen wird. Der Grenzwert $\kappa'_{max}$ hängt dabei normalerweise von der Krümmung $\kappa'_{max}$ in dem Scheitelpunkt einer Kurve ab. In Deutschland schreiben die RAS-L (RAS-L = Richtlinien für die Anlage von Straßen - Linienführung) beispielsweise vor, dass

$$(9) \qquad \kappa'_{max} = 9 \kappa_{max}{}^2$$

gilt.

Zusätzlich zu einem aus dem Stand der Technik bereits schon bekannten Plausibilitätsmaß, das sich, in Verbindung mit der LKS Funktion eines Fahrerassistenzsystems, auf die Detektionsqualität von Umfeldmerkmalen aus dem Umfeld des Fahrzeugs ( zum Beispiel Begrenzung der Fahrstreifen) bezieht, kann nun mittels der erfindungsgemäßen Lehre ein weiteres Plausibilitätsmaß P2 abgeleitet Werden, das ein Maß für die physikalische Plausibilität der Referenztrajektorie ist. Das Plausibilitätsmaß $P_2$ ist eine dimensionslose Größe und liegt in einem definierten Wertebereich P. Es gilt also dafür folgende Beziehung:

$$(10) \qquad P_2 \in P . \qquad P = \{0 \ldots 1\} \, .$$

Dabei impliziert der Wert 1 eine physikalisch korrekte

Referenztrajektorie, während der Wert 0 einer physikalisch nicht plausiblen Referenztrajektorie entspricht.

Der Anfangswert für das Plausibilitätsmaß $P_2$ liegt bei dem Wert 0. Wenn die modellbasiert berechneten Änderungen der lateralen Ablage des Fahrzeugs und der Orientierung des Fahrzeugs unterhalb der definierten Grenzwerte liegen, dann wird das Plausibilitätsmaß $P_2$ jeweils um ein Inkrement ΔP erhöht. Wenn während des Fahrbetriebs mit aktivierter LKS-Funktion die festgelegten Grenzwerte überschritten werden, dann wird das Plausibilitätsmaß $P_2$ andererseits um das Inkrement ΔP erniedrigt. An den Grenzen des Wertebereichs werden jeweils der Minimal- bzw. der Maximalwert gehalten.

Die LKS-Funktion des Fahrerassistenzsystems verarbeitet das erfindungsgemäß ermittelte physikalische Plausibilitätsmaß $P_2$ parallel zu weiteren in dem Fahrerassistenzsystem vorgesehenen Plausibilitätsmaßen. Findet während des Fahrbetriebs des Fahrzeugs beispielsweise ein Spurwechsel statt, so können Änderungen des physikalischen Plausibilitätsmaßes $P_2$ auftreten, die außerhalb der definierten Grenzwerte liegen. Dies geschieht beispielsweise bei dem Überfahren der Fahrstreifenmarkierung bei dem Wechsel des Referenzfahrstreifens. Bei einer derartigen Situation wird das physikalische Plausibilitätsmaß bis zu einer Stabilisierung der Fahrsituation nicht ausgewertet. In dieser Übergangsphase kann ein zuvor ermittelter Wert des Plausibilitätsmaßes zeitweise beibehalten werden.

Figur 1 zeigt ein Blockschaltbild eines Fahrerassistenzsystems 10, das erfindungsgemäß steuerbar ist. Das Fahrerassistenzsystem 10 umfasst ein erstes Funktionsmodul 1, das die laterale Ablage Y des Fahrzeugs und deren Änderung erfasst und auswertet. Weiterhin umfasst das Fahrerassistenzsystem 10 ein Funktionsmodul 2, das die Fahrzeugorientierung und deren Änderung erfasst und auswertet. Schließlich umfasst das Fahrerassistenzsystem 10 noch ein weiteres Funktionsmodul 3, das die Krümmung der Fahrspur und deren Änderung erfasst und auswertet. Die Funktionsmodule 1, 2 und 3 sind mit einem weiteren Funktionsmodul 4 verbunden, das aus den ihm eingangsseitig zugeführten Größen das Plausibilitätsmaß $P_2$ ermittelt. Als Grenzwerte für die Spurparameter werden dabei vorteilhaft fahrtechnisch plausible Werte angenommen. Für die Krümmung bzw. Änderung der Krümmung werden zweckmäßig die in den RAS-L definierten Werte übernommen. Die vorgebbaren Grenzwerte werden vorteilhaft in einer Speichereinrichtung des Fahrerassistenzsystems 10 gespeichert. Das in dem Funktionsmodul 4 ermittelte Plausibilitätsmaß $P_2$ wird für die Steuerung der LKS-Funktion des Fahrerassistenzsystems 10 bereitgestellt, die durch den Block 5 des in Figur 1 dargestellten Blockdiagramms repräsentiert ist. Wie bereits schon erwähnt, steuert das Plausibilitätsmaß $P_2$, ggf. in Zusammenwirken mit weiteren Plausibilitätsmaßen, beispielsweise die Aktivierung bzw. Deaktivierung der LKS-Funktion des Fahrerassistenzsystems.

**Patentansprüche**

1. Verfahren für die Steuerung eines Fahrerassistenzsystems (10) mit LKS-Funktion (LKS = Lane Keeping Support eines Fahrzeugs, bei dem der Verlauf der Fahrspur mit wenigstens einem bordeigenen Sensor erfasst und aus den Sensorsignalen eine Referenztrajektorie (Y) für das Fahrzeug abgeleitet wird, auf der die LKS-Funktion das Fahrzeug führt, **dadurch gekennzeichnet, dass** Spurparameter der Referenztrajektorie (Y) und zeitliche Änderungen dieser Spurparameter erfasst werden, dass Betragswerte der zeitlichen Änderung der Spurparameter mit vorgegebenen Grenzwerten verglichen werden und dass bei unterhalb der Grenzwerte liegenden Betragswerten der zeitlichen Änderungen der Spurparameter die Referenztrajektorie (Y) als physikalisch plausibel angenommen wird und die LKS-Funktion aktiviert bleibt.

2. Verfahren nach Anspruch 1; **dadurch gekennzeichnet, dass** als Spurparameter die laterale Ablage des Fahrzeugs von der Referenztrajektorie, die Orientierung des Fahrzeugs in Bezug auf die Referenztrajektorie und die Krümmung der Referenztrajektorie berücksichtigt werden.

3. Verfahren nach einem der vorhergehenden Ansprüche, **dadurch gekennzeichnet, dass** aus der Abweichung der Betragswerte der zeitlichen Änderungen der Spurparameter von den vorgegebenen Grenzwerten ein die physikalische Plausibilität der Referenztrajektorie kennzeichnendes Plausibilitätsmaß (P2) abgeleitet wird.

4. Verfahren nach Anspruch 3 **dadurch gekennzeichnet, dass** das Plausibilitätsmaß ($P_2$) auf den Wertebereich (P) normiert ist.

5. Verfahren nach einem der Ansprüche 3 oder 4 **dadurch gekennzeichnet, dass** der Wert Null als Initialwert des Plausibilitätsmaßes ($P_2$) gesetzt wird.

6. Verfahren nach einem der Ansprüche 3-5 **dadurch gekennzeichnet, dass**, ausgehend von dem Initialwert Null, das Plausibilitätsmaß ($P_2$) bis zu dem Erreichen eines Maximalwerts um ein Inkrement ($\Delta P$) erhöht wird, solange die Betragswerte der zeitlichen Änderungen der Spurparameter unterhalb vorgebbarer Grenzwerte liegen.

7. Verfahren nach Anspruch 6 **dadurch gekennzeichnet, dass** nach Erreichen des Maximalwerts das Plausibilitätsmaß ($P_2$) auf diesem Maximalwert gehalten wird, solange die Betragswerte der zeitlichen Änderungen der Spurparameter unterhalb der vorgegebenen Grenzwerte liegen.

8. Verfahren nach einem der Ansprüche 3-7 **dadurch gekennzeichnet, dass** bei Überschreiten der für die Betragswerte der zeitlichen Änderungen der Spurparameter vorgesehenen Grenzwerte das Plausibilitätsmaß ($P_2$) um ein Inkrement ($\Delta P$) vermindert wird.

9. Verfahren nach einem der vorhergehenden Ansprüche,

**dadurch gekennzeichnet, dass** als Grenzwerte fahrtechnisch praktikable Werte angenommen werden.

10. Verfahren nach einem der vorhergehenden Ansprüche,
**dadurch gekennzeichnet, dass** als Grenzwerte für die Krümmung bzw. Krümmungsänderung die in den RAS-L (Richtlinien für die Anlage von Straßen-Linienführung)festgelegten Werte übernommen werden.

11. Verfahren nach einem der vorhergehenden Ansprüche,
**dadurch gekennzeichnet, dass** die Grenzwerte in einer Speichereinrichtung des Fahrerassistenzsystems (10) gespeichert sind.

12. Vorrichtung für die Steuerung eines
Fährerassistenzsystems (10), bei welchem der Verlauf der Fahrspur mit wenigstens einem bordeigenen Sensor erfasst wird, **gekennzeichnet durch** Funktionsmodule (1 - 4), die derart ausgestaltet sind, dass Spurparameter der Referenztrajektorie (Y) und zeitliche Änderungen dieser Spurparameter erfasst werden, dass Betragswerte der zeitlichen Änderung der Spurparameter mit vorgegebenen Grenzwerten verglichen werden und dass bei unterhalb der Grenzwerte liegenden Betragswerten der zeitlichen Änderungen der Spurparameter die Referenztrajektorie (Y) als physikalisch plausibel angenommen wird und die LKS-Funktion aktiviert bleibt.

**Claims**

1. Method for controlling a driver assist system (10) with an LKS (Lane Keeping Support) function of a vehicle, in which the profile of the lane is sensed with at least one sensor mounted on board, and a reference trajectory (Y) for the vehicle is derived from the sensor signals, on which reference trajectory (Y) the LKS function drives the vehicle, **characterized in that** course parameters of the reference trajectory (Y) and changes in these course parameters over time are sensed, **in that** absolute values of the change in the course parameters over time are compared with predefined limiting values, and **in that** in the case of absolute values of the changes in the course parameters over time which are below the limiting values, the reference trajectory (Y) is assumed to be physically plausible and the LKS function remains activated.

2. Method according to Claim 1, **characterized in that** the lateral deviation of the vehicle from the reference trajectory, the orientation of the vehicle with respect to the reference trajectory and the curvature of the reference trajectory are taken into account as course parameters.

3. Method according to one of the preceding claims, **characterized in that** a plausibility measure ($P_2$) which characterizes the physical plausibility of the reference trajectory is derived from the deviation of the absolute values of the changes in the course parameters over time from the predefined limiting values.

4. Method according to Claim 3, **characterized in that** the plausibility measure ($P_2$) is standardized to the value range (P).

5. Method according to one of Claims 3 or 4, **characterized in that** the value zero is set as initial value of the plausibility measure ($P_2$).

6. Method according to one of Claims 3-5, **characterized in that** starting from the initial value zero, the plausibility measure ($P_2$) is increased by an increment ($\Delta P$) until a maximum value is reached for as long as the absolute values of the changes in the course parameters over time are below predefinable limiting values.

7. Method according to Claim 6, **characterized in that** after the maximum value has been reached, the plausibility measure ($P_2$) is kept at this maximum value for as long as the absolute values of the changes in the course parameters over time are below the predefined limiting values.

8. Method according to one of Claims 3-7, **characterized in that** when the limiting values which are provided for the absolute values of the changes in the course parameters over time are exceeded, the plausibility measure ($P_2$) is decreased by an increment ($\Delta P$).

9. Method according to one of the preceding claims, **characterized in that** values which are practical in terms of driving technology are adopted as limiting values.

**10.** Method according to one of the preceding claims, **characterized in that** the values which are defined in the RAS-L (Richtlinien für die Anlage von Straßen-Linienführung) [guidelines for road construction and road layout] are adopted as limiting values for the curvature and/or change in curvature.

**11.** Method according to one of the preceding claims, **characterized in that** the limiting values are stored in a memory device of the driver assist system (10).

**12.** Device for controlling a driver assist system (10) in which the profile of the lane is sensed with at least one sensor mounted on board, **characterized by** function modules (1-4) which are configured in such a way that course parameters of the reference trajectory (Y) and changes in these course parameters over time are sensed, in that absolute values of the change in the course parameters over time are compared with predefined limiting values, and in that in the case of absolute values of the changes in the course parameters over time which are below the limiting values, the reference trajectory (Y) is assumed to be physically plausible and the LKS function remains activated.

**Revendications**

**1.** Procédé pour commander un système d'assistance au conducteur (10) comprenant une fonction LKS (LKS = Lane Keeping Support - Assistance au maintien de la trajectoire) d'un véhicule, selon lequel le tracé de la voie de circulation est détecté avec au moins un capteur embarqué propre et une trajectoire de référence (Y) pour le véhicule est dérivée des signaux du capteur, sur laquelle la fonction LKS guide le véhicule, **caractérisé en ce que** les paramètres de voie de la trajectoire de référence (Y) et les variations dans le temps de ces paramètres de voie sont détectés, que les valeurs absolues de la variation dans le temps des paramètres de voie sont comparées avec des valeurs limites prédéfinies et que si les valeurs absolues sont inférieures aux valeurs limites, les variations dans le temps des paramètres de voie de la trajectoire de référence (Y) sont considérées comme étant physiquement plausibles et la fonction LKS reste activée.

**2.** Procédé selon la revendication 1, **caractérisé en ce que** les paramètres de voie pris en considération sont la déviation latérale du véhicule par rapport à la trajectoire de référence, l'orientation du véhicule par rapport à la trajectoire de référence et la courbure de la trajectoire de référence.

**3.** Procédé selon l'une des revendications précédentes, **caractérisé en ce qu'**un indice de plausibilité ($P_2$) qui caractérise la plausibilité physique de la trajectoire de référence est déduit de l'écart entre les valeurs absolues des variations dans le temps des paramètres de voie et les valeurs limites prédéfinies.

**4.** Procédé selon la revendication 3, **caractérisé en ce que** l'indice de plausibilité ($P_2$) est normalisé sur la plage de valeurs (P).

**5.** Procédé selon l'une des revendications 3 ou 4, **caractérisé en ce que** la valeur zéro est fixée comme valeur initiale de l'indice de plausibilité ($P_2$).

**6.** Procédé selon l'une des revendications 3 à 5, **caractérisé en ce qu'**en partant de la valeur initiale égale à zéro, l'indice de plausibilité ($P_2$) est augmenté d'un incrément ($\Delta P$) jusqu'à atteindre une valeur maximale tant que les valeurs absolues des variations dans le temps des paramètres de voie se trouvent au-dessous des valeurs limites à prédéfinir.

**7.** Procédé selon la revendication 6, **caractérisé en ce qu'**après avoir atteint la valeur maximale, l'indice de plausibilité ($P_2$) est maintenu à cette valeur maximale tant que les valeurs absolues des variations dans le temps des paramètres de voie se trouvent au-dessous des valeurs limites prédéfinies.

**8.** Procédé selon l'une des revendications 3 à 7, **caractérisé en ce qu'**en cas de dépassement des valeurs limites prévues pour les valeurs absolues des variations dans le temps des paramètres de voie, l'indice de plausibilité ($P_2$) est diminué d'un incrément ($\Delta P$).

**9.** Procédé selon l'une des revendications précédentes, **caractérisé en ce que** les valeurs limites adoptées sont des valeurs pouvant être obtenues en pratique en technique de conduite.

10. Procédé selon l'une des revendications précédentes, **caractérisé en ce que** les valeurs fixées dans les RAS-L (Directives allemandes relatives aux routes - Tracé des lignes) sont adoptées en tant que valeurs limites pour la courbure ou la variation de la courbure.

11. Procédé selon l'une des revendications précédentes, **caractérisé en ce que** les valeurs limites sont mémorisées dans un dispositif de mémoire du système d'assistance au conducteur (10).

12. Dispositif pour commander un système d'assistance au conducteur (10), avec lequel le tracé de la voie de circulation est détecté avec au moins un capteur embarqué propre, **caractérisé par** des modules de fonction (1 - 4) qui sont configurés de telle sorte que les paramètres de voie de la trajectoire de référence (Y) et les variations dans le temps de ces paramètres de voie sont détectés, que les valeurs absolues de la variation dans le temps des paramètres de voie sont comparées avec des valeurs limites prédéfinies et que si les valeurs absolues sont inférieures aux valeurs limites, les variations dans le temps des paramètres de voie de la trajectoire de référence (Y) sont considérées comme étant physiquement plausibles et la fonction LKS reste activée.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10311518 A1
- DE 10137292 A1
- DE 19720626 A1
- US 20080091318 A1

- WO 2008006507 A
- US 20070164852 A
- US 20070203617 A
- DE 102005003192